# EUROPÄISCHE PATENTSCHRIFT

(11) **EP 2 697 894 B1**
(45) Veröffentlichungstag und Bekanntmachung des Hinweises auf die Patenterteilung: **27.02.2019**
(21) Anmeldenummer: 12715654.5
(22) Anmeldetag: 11.04.2012
(51) Int. Cl.: H02K 11/00, H02K 29/08, H02P 6/16

(54) **ELEKTRONISCH KOMMUTIERTER ELEKTROMOTOR MIT EINER ROTORPOSITIONSERFASSUNG MIT STÖRFELDKOMPENSATION**
ELECTRONICALLY COMMUTATED ELECTRIC MOTOR COMPRISING ROTOR POSITION DETECTION WITH INTERFERENCE FIELD COMPENSATION
MOTEUR ÉLECTRIQUE À COMMUTATION ÉLECTRONIQUE DOTÉ D'UN SYSTÈME DE DÉTECTION DE LA POSITION DU ROTOR À COMPENSATION DE CHAMPS PARASITE

(30) Priorität: 11.04.2011 DE 102011007147
(43) Veröffentlichungstag der Anmeldung: 19.02.2014
(73) Patentinhaber: Robert Bosch GmbH, 70442 Stuttgart (DE)
(72) Erfinder: CHABAUD, Antoine, 71732 Tamm (DE); FREY, Martin, 72805 Lichtenstein (DE); FINKE, Sven, H-1103 Budapest (HU); SADER, Frank, 61462 Königstein (DE); VOGEL, Markus, 70839 Gerlingen (DE)
(86) Internationale Anmeldenummer: PCT/EP2012/056539
(87) Internationale Veröffentlichungsnummer: WO 2012/140053

(56) Entgegenhaltungen:
- DE-A1-102006 055 305
- DE-A1-102007 052 131
- DE-A1-102009 028 170

## Beschreibung

### Stand der Technik

Die Erfindung betrifft einen elektronisch kommutierten Elektromotor. Der elektronisch kommutierte Elektromotor weist einen insbesondere permanentmagnetisch ausgebildeten Rotor und einen Stator auf. Der Elektromotor weist auch eine mit dem Stator verbundene Steuereinheit auf. Die Steuereinheit ist ausgebildet, den Stator zum Erzeugen eines magnetischen Drehfeldes zu bestromen.

Bei aus dem Stand der Technik bekannten Elektromotoren sind Hall-Sensoren zum Erfassen einer Rotorposition bekannt, wobei der Elektromotor in Abhängigkeit der Rotorposition zum Drehbewegen des Rotors angesteuert werden kann.

Aus der DE 10 2009 028 170 A1 ist ein Elektromotor bekannt, bei dem mittels eines Hall-Sensors eine Rotorposition und ein Gebermagnetfeld erfasst werden kann, wobei Temperatur- und Alterungseffekte bei einer Ermittlung einer Rotorlage berücksichtigt werden können.

### Offenbarung der Erfindung

Der erfindungsgemässe elektronisch kommutierter Elektromotor ist in Anspruch 1 definiert. Ein Verfahren zum Betreiben des erfindungsgemässen Elektromotors ist in Anspruch 7 definiert. Weitere Ausführungsformen der Erfindung sind Gegenstand der abhängigen Ansprüche 2 - 6 und 8.

Der Elektromotor weist einen Hall-Sensor auf, welcher ausgebildet ist, wenigstens einen Betrag eines Gebermagnetfeldes, erzeugt von einem mit dem Rotor verbundenen Gebermagnet, insbesondere im stromlosen Zustand des Stators, zu erfassen. Weiter weist der Elektromotor wenigstens einen magneto-resistiven Sensor auf, welcher ausgebildet ist, eine Ausrichtung eines Gesamtmagnetfeldes während eines Rotorumlaufes des Rotors zu erfassen und ein diese repräsentierendes Rotorpositionssignal zu erzeugen, wobei das Gesamtmagnetfeld das Gebermagnetfeld und ein dieses überlagerndes Störmagnetfeld umfasst.

Die Steuereinheit ist eingangsseitig mit den Rotorpositionssensoren verbunden. Die Steuereinheit ist ausgebildet, die Rotorposition des Rotors wenigstens in Abhängigkeit von der Ausrichtung des Gesamtmagnetfeldes, wenigstens eines zuvor abgespeicherten Betrages des Gebermagnetfeldes und eines Betrages und einer Ausrichtung eines zumindest von elektrischen Komponenten des Elektromotors erzeugten Störmagnetfeldes zu ermitteln. So kann vorteilhaft eine exakte Ausrichtung des Gebermagnetfeldes zur Rotorpositionsbestimmung vektoriell ermittelt werden.

Der Betrag eines Magnetfeldes ist bevorzugt der Betrag einer magnetischen Flussdichte des Magnetfeldes.

Der magneto-resistive Sensor ist beispielsweise ein CMR-Sensor (CMR = Colossal-Magneto-Resistive), ein AMR-Sensor (AMR = Aniotrope-Magneto-Resistive), ein GMR-Sensor (GMR = Giant-Magneto-Resistive) oder ein TMR-Sensor (TMR = Tunnel-Magneto-Resistive). Das Rotorpositionssignal des magneto-resistiven Sensors wird im Folgenden auch XMR-Rotorpositionssignal genannt.

Dazu kann beispielsweise das Störmagnetfeld in Form eines Störmagnetfeld-Vektors - insbesondere eines vektoriellen Zeigers in einer komplexen Form - in einem Speicher der Steuereinheit abgespeichert sein. Weiter bevorzugt kann während eines Rotorumlaufes, insbesondere in einem stromlosen Zustand des Stators, von dem Hall-Sensor ein Betrag oder zusätzlich eine Ausrichtung des Gebermagnetfeldes erfasst werden und in Form eines Gebermagnetfeld-Vektors in dem Speicher abgespeichert werden. Während eines Betriebs des Elektromotors, insbesondere eines bestromten Betriebszustand des Elektromotors kann dann mittels des magneto-resistiven Sensors die zuvor erwähnte Ausrichtung des Gesamtmagnetfeldes erfasst werden. Das Gesamtmagnetfeld repräsentiert dabei das Gebermagnetfeld, welches von dem Störmagnetfeld überlagert wird.

Die Steuereinheit ist ausgebildet, mittels Vektoraddition die Ausrichtung des Gebermagnetfeldes in Abhängigkeit von der Ausrichtung des Gesamtmagnetfeldes und einer Ausrichtung und einem Betrag des Störmagnetfeldes und einem zuvor abgespeicherten Betrag des Gebermagnetfeldes zu ermitteln.

Der Elektromotor weist wenigstens einen weiteren Hall-Sensor auf. Der weitere Hall-Sensor ist ausgebildet, die Rotorposition zu erfassen und ein weiteres die Rotorposition repräsentierendes Rotorpositionssignal zu erzeugen, welches wenigstens einen Betrag oder zusätzlich eine Ausrichtung des Gebermagnetfeldes repräsentiert.

Der Hall-Sensor und der weitere Hall-Sensor sind in Rotorumlaufrichtung zueinander versetzt angeordnet. Weiter bevorzugt sind der Hall-Sensor und der weitere Hall-Sensor in Rotorumlaufrichtung orthogonal zueinander versetzt angeordnet. Durch die versetzte Anordnung bzw. die orthogonal versetzte Anordnung der Hall-Sensoren kann die Rotorposition vorteilhaft exakter erfasst werden insoweit die Rotorpositionssignale im Falle einer sinusförmigen Ausbildung zu einem Zeitpunkt ausgewertet werden können, wo das jeweilige Rotorpositionssignal eine größte zeitliche Änderung aufweist.

Mittels des Hall-Sensors kann vorteilhaft ein Erfassungsbereich des magneto-resistiven Sensors auf einen vollen Rotorumlauf, insbesondere 360 Grad erweitert werden, wenn der Erfassungsbereich des magneto-resistiven Sensors nur eine halbe Rotorumdrehung, insbesondere 180 Grad beträgt.

Weiter vorteilhaft kann eine Winkelerfassung des Magneto-resistiven Sensors um eine Erfassung der Magnetflussdichte, insbesondere eines Betrages einer Magnetflussdichte des Gebermagnetfeldes ergänzt werden.

Der Hall-Sensor ist beispielsweise ein linear erfassender Hall-Sensor, welcher ausgebildet ist, ein analoges Ausgangssignal zu erzeugen.

In einer bevorzugten Ausführungsform ist der Hall-Sensor und/oder der weitere Hall-Sensor ein temperaturkompensierter Hall-Sensor, wobei der temperaturkompensierte Hall-Sensor ausgebildet ist, ein insbesondere digitales Hallsignal als Ausgangssignal unabhängig von einer Temperatur des temperaturkompensierten Hall-Sensors zu erzeugen. Ein digitales Hallsignal ist beispielsweise ein Pulsweitenmoduliertes Signal oder ein SPI-Signal (SPI = Serial-Peripherial-Interface). So kann die Rotorposition vorteilhaft temperaturunabhängig erzeugt werden, sodass auch bei einer Erwärmung des Elektromotors oder bei einem Betrieb des Elektromotors bei Minustemperaturen von weniger als Null Grad Celsius vorteilhaft eine genaue Rotorpositionsermittlung erfolgen kann.

Bevorzugt ist der Hall-Sensor ein linear erfassender Hall-Sensor, welcher ausgebildet ist, ein analoges Ausgangssignal zu erzeugen, und der weitere Hall-Sensor ein temperaturkompensierter Hall-Sensor, welcher ausgebildet ist, ein digitales Ausgangssignal zu erzeugen. Die Ausgangssignale der Hall-Sensoren repräsentieren jeweils einen Betrag, insbesondere einen Betrag einer magnetischen Flussdichte des von dem Hall-Sensor erfassten Gebermagnetfeldes.

Die Steuereinheit ist bevorzugt ausgebildet, aus den Rotorpositionssignalen des Hall-Sensors und des weiteren Hall-Sensors ein Gesamt-Hallsignal zu erzeugen, und das Gebermagnetfeld, insbesondere den Betrag und die Ausrichtung des Gebermagnetfeldes in Abhängigkeit des Gesamt-Hallsignals zu ermitteln. Das Gesamt-Hallsignal ist bevorzugt ein Quadratursignal, wobei im Falle des Quadratursignals der Hall-Sensor und der weitere Hall-Sensor in Rotorumlaufrichtung zueinander orthogonal zueinander versetzt angeordnet sind.

Mittels der orthogonalen Anordnung kann vorteilhaft eine besonders exakte Rotorpositionserfassung mittels der Steuereinheit erfolgen. Weiter bevorzugt kann die Steuereinheit während eines Betriebes des Elektromotors die Rotorposition in Abhängigkeit des XMR-Rotorpositionssignals oder zusätzlich in Abhängigkeit des Gesamt-Hallsignals ermitteln. So kann vorteilhaft mittels des Gesamt-Hallsignals eine zusätzliche Rotorpositionserfassung gebildet sein, welche die Rotorpositionserfassung mittels des magneto-resistiven Sensors redundant ergänzt.

In einer bevorzugten Ausführungsform des Elektromotors ist die Steuereinheit ausgebildet, eine Ausrichtung oder zusätzlich den Betrag des Gesamtmagnetfeldes in Abhängigkeit des Gesamt-Hallsignals, insbesondere Quadratursignals, zu ermitteln. So kann das Gesamtmagnetfeld vorteilhaft mittels zwei zueinander verschiedener Sensortypen erfasst werden und eine Erfassungsgenauigkeit der Rotorposition verbessert werden.

Bevorzugt weist der temperaturkompensierte Hall-Sensor eine Betriebsspannung auf, die einer Betriebsspannung der Steuereinheit entspricht. So braucht der Elektromotor vorteilhaft keine Spannungswandler zum Erzeugen einer gesonderten Betriebsspannung für den Hallsensor aufweisen.

Gemäss Anspruch 7 betrifft die Erfindung auch ein Verfahren zum Betreiben eines elektronisch kommutierten Elektromotors der vorbeschriebenen Art.

Bei dem Verfahren zum Betreiben eines elektronisch kommutierten Elektromotors wird mittels eines Hall-Sensors wenigstens eines Betrag eines Gebermagnetfeldes, erzeugt von einem mit dem Rotor verbundenen Gebermagnet, insbesondere im stromlosen Zustand des Stators erfasst und abgespeichert. Weiter wird eine Ausrichtung eines Gesamtmagnetfeldes während eines Rotorumlaufes des Rotors mittels eines Magneto-Resistiven Sensors erfasst und ein die Ausrichtung repräsentierendes Rotorpositionssignal erzeugt, wobei das Gesamtmagnetfeld das Gebermagnetfeld und ein dieses überlagerndes Störmagnetfeld umfasst, wobei eine Ausrichtung des Gebermagnetfeldes in Abhängigkeit der erfassten Ausrichtung des Gesamtmagnetfeldes, des zuvor abgespeicherten Betrages des Gebermagnetfeldes und eines Betrages und einer Ausrichtung eines von elektrischen Komponenten des Elektromotors erzeugtes Störmagnetfeldes vektoriell ermittelt wird.

Bei dem Verfahren wird mittels eines weiteren Hallsensors das Gebermagnetfeld erfasst und ein weiteres Hallsignal erzeugt. Aus dem Hallsignal und dem weiteren Hallsignal wird ein Gesamt-Hallsignal gebildet, welches das Gebermagnetfeld repräsentiert.

Bevorzugt ist das Gesamt-Hallsignal ein Quadratursignal, welches zwei zueinander um 90 Grad Phasenverschobene Hallsignale repräsentiert.

Die Erfindung wird nun im Folgenden anhand von Figuren und weiteren Ausführungsbeispielen beschrieben. Weitere vorteilhafte Ausführungsvarianten ergeben sich aus den Merkmalen der abhängigen Ansprüche und aus den zu den Figuren beschriebenen Merkmalen.
Figur 1 zeigt ein Ausführungsbeispiel für einen elektronisch kommutierten Elektromotor, bei dem ein magnetisches Störfeld bei einer Rotorpositionserfassung eliminiert werden kann;
Figur 2 zeigt eine Ortskurve, in der das magnetische Störfeld und das Feld eines Gebermagneten und ein Prinzip der rechnerischen Eliminierung des Störfeldes zur Ermittlung des Magnetfeldes des Gebermagnets dargestellt ist;
Figur 3 zeigt ein Beispiel für ein Verfahren zum Betreiben eines elektronisch kommutierten Elektromotors.

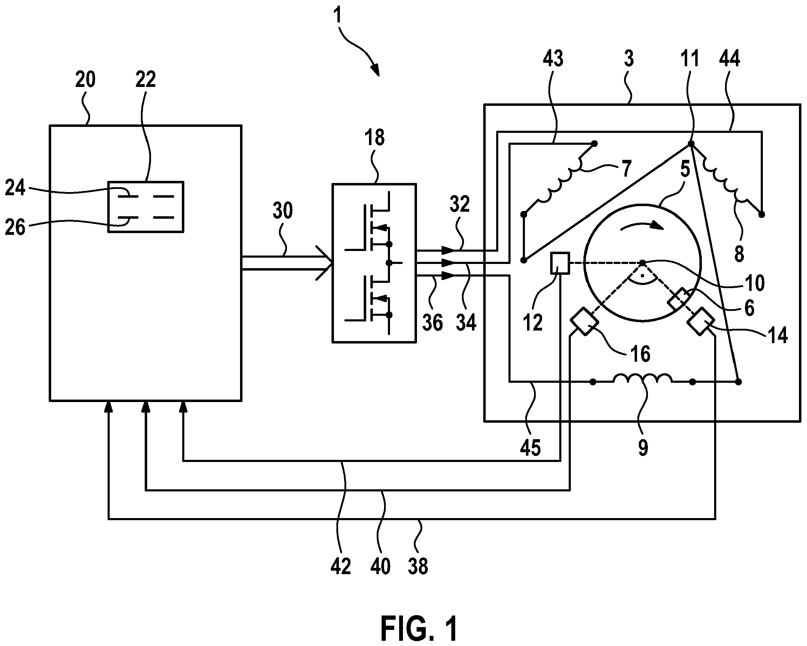

Figur 1 zeigt ein Ausführungsbeispiel für einen elektronisch kommutierten Elektromotor 1. Der elektronisch kommutierte Elektromotor 1 weist einen insbesondere permanentmagnetisch ausgebildeten Rotor 5 auf. Der Rotor 5 ist um eine Rotationsachse 10 drehbar gelagert. Der Rotor 5 weist einen mit dem Rotor 5 verbundenen Gebermagneten 6 auf, welcher angeordnet ist, dass ein von dem Gebermagnet 6 erzeugtes Gebermagnetfeld von wenigstens einem Hall-Sensor, in diesem Ausführungsbeispiel den Hall-Sensoren 14 und 16 erfasst werden kann. Der Hall-Sensor 14 ist beispielsweise ein linear erfassender analoger Hall-Sensor, der Hall-Sensor 16 ist beispielsweise ein temperaturkompensierter Hall-sensor, welcher ausgebildet ist, ein insbesondere digitales Ausgangssignal zu erzeugen, das die magnetische Flussdichte eines vom Hall-Sensor 16 erfassten Magnetfeldes repräsentiert.

Der Elektromotor 1 weist auch einen Stator 3 auf. Der Stator 3 weist Statorspulen, in diesem Ausführungsbeispiel drei Statorspulen 7, 8 und 9 auf. Die Statorspulen 7, 8 und 9 weisen jeweils einen ersten und einen zweiten Anschluss auf, wobei die zweiten Anschlüsse der Statorspulen 7, 8 und 9 mit einem gemeinsamen Sternpunktanschluss 11 elektrisch miteinander verbunden sind.

Die Statorspule 7 ist mit ihrem ersten Anschluss mittels einer Verbindungsleitung 43 mit einem Ausgang einer Leistungsendstufe 18 des Elektromotors 1 verbunden. Die Statorspule 8 ist mit ihrem ersten Anschluss mittels einer Verbindungsleitung 44 mit dem Ausgang der Leistungsendstufe 18 verbunden. Die Statorspule 9 ist mit ihrem ersten Anschluss mittels einer Verbindungsleitung 45 mit dem Ausgang der Leistungsendstufe 18 verbunden. Die Leistungsendstufe 18 weist beispielsweise für jede Statorspule des Stators zwei Transistor-Halbbrücken auf. Denkbar ist auch eine B6-Transistor-Brücke als Leistungsendstufe. Die Transistoren sind beispielsweise jeweils IGBT-Transistoren (IGBT = Insulated-Gate-Bipolar-Transistor) oder FET-Transistoren (FET = Feld-Effekt-Transistor), insbesondere MIS-FET-Transistoren (MIS = Metal-Insulated-Semiconductor).

Der Elektromotor 1 weist auch eine Verarbeitungseinheit 20 auf, welche ausgangsseitig über eine mehrkanalige Verbindung 30 mit der Leistungsendstufe 18 verbunden ist. Die Verarbeitungseinheit 20 ist ausgebildet, die Leistungsendstufe 18 über die Verbindung 30 zum Bestromen der Statorspulen 7, 8 und 9 derart anzusteuern, dass mittels der Statorspulen 7, 8 und 9 ein magnetisches Drehfeld zum Drehbewegen des Rotors 5 erzeugt werden kann.

Der Elektromotor 1 weist auch einen magneto-resistiven Sensor 12 auf, welcher - gestrichelt angedeutet - mit dem Rotor 5 drehverbunden ist. Der magneto-resistive Sensor 12 ist ausgebildet, eine Rotorposition des Rotors 5, insbesondere eine Rotorwinkelstellung des Rotors 5 zu erfassen und ein XMR-Rotorpositionssignal zu erzeugen, das die Rotorposition des Rotors 5 repräsentiert und dieses ausgangsseitig über eine Verbindungsleitung 42 an die Verarbeitungseinheit 20 zu senden. Dazu ist der magneto-resistive Sensor 12 über die Verbindungsleitung 42 mit der Verarbeitungseinheit 20 verbunden.

Der Hall-Sensor 14 ist ausgangsseitig über eine Verbindungsleitung 38 mit der Verarbeitungseinheit 20 verbunden. Der Hall-Sensor 16 ist ausgangsseitig über eine Verbindungsleitung 40 mit der Verarbeitungseinheit 20 verbunden.

Die Funktionsweise des Elektromotors 1 wird nun im Folgenden erläutert:
Während des Betriebs des Elektromotors 1 wird von elektrischen Komponenten, beispielsweise von den Verbindungsleitungen 32, 34 und 36 des Elektromotors magnetische Störfelder erzeugt, welche sich dem Magnetfeld des Gebermagnets 6 überlagern. Die Hall-Sensoren 14 und 16 sind jeweils ausgebildet, das Magnetfeld des Gebermagnets 6 zu erfassen und ein entsprechendes Rotorpositionssignal zu erzeugen. Die Verarbeitungseinheit 20 ist ausgebildet, zu einem Zeitpunkt eines nicht bestromten Zustands der Statorspulen 7, 8 und 9 die Rotorpositionssignale der Hall-Sensoren 14 und 16 auszuwerten und einen Betrag des Gebermagnetfeldes, insbesondere einen Betrag der magnetischen Flussdichte des Gebermagnetfeldes zu ermitteln und abzuspeichern. Die Ermittlung der Flussdichte des Gebermagnetfeldes kann unter Anwendung von Rechenregeln für komplexe Zeiger durch die Verarbeitungseinheit 20 erfolgen.

Dazu kann die Verarbeitungseinheit 20 den Speicher 22 aufweisen oder mit diesem verbunden sein.

Der Speicher 22 hält in diesem Ausführungsbeispiel einen Betrag und eine Ausrichtung eines Störmagnetfeldes 24 vorrätig. Das Störmagnetfeld 24 ist beispielsweise in Abhängigkeit eines Rechenmodells ermittelt worden.

Der Speicher 22 hält in diesem Ausführungsbeispiel auch einen Datensatz 26 vorrätig. Der Datensatz 26 repräsentiert einen Betrag des von den Hall-Sensoren 14 und 16 erfassten Magnetfeldes des Gebermagnets 6. Die Verarbeitungseinheit 22 kann den Betrag des Gebermagnetfeldes beispielsweise in Abhängigkeit eines aus den Rotorpositionssignalen der Hall-Sensoren 14 und 16 gebildeten Quadratursignals ermitteln.

Die Verarbeitungseinheit 20 ist ausgebildet, während eines Betriebs des Elektromotors 1 die Rotorposition des Rotors 5 in Abhängigkeit eines von dem magneto-resistiven Sensor 12 erfassten Gesamtfeldes, insbesondere einer Ausrichtung des Gesamtfeldes, zu ermitteln, wobei die Verarbeitungseinheit 20 ausgebildet ist, zum Ermitteln der Rotorposition die Ausrichtung des Gebermagnetfeldes des Gebermagnets 6 mittels Vektoraddition aus dem Störfeldvektor, repräsentiert durch den Datensatz 24, und dem zuvor abgespeicherten Betrag des Gebermagnetfeldes zu ermitteln.

Vorteilhaft ist wenigstens einer der Hall-Sensoren 14 und 16 ein temperaturkompensierter Hall-Sensor.

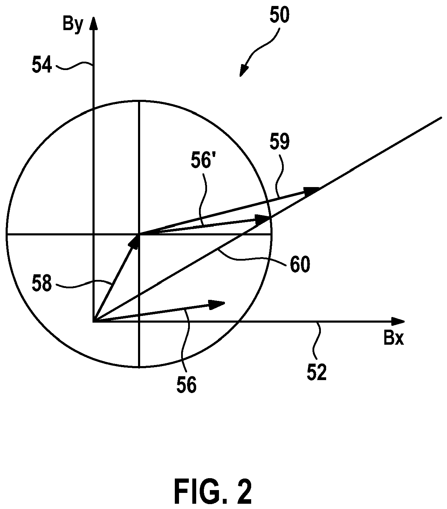

Die zuvor erwähnten Vektoren, insbesondere des Störfeldes und des Magnetfeldes des Gebermagnets 6, sind im Folgenden in Figur 2 in einer Ortskurve in einer komplexen Ebene dargestellt.

Figur 2 zeigt eine Ortskurve 50, wobei ein Realteil der in Figur 1 erwähnten Magnetfeldvektoren auf einer Abszisse 52 aufgetragen ist und ein Imaginärteil der in der Beschreibung zu Figur 1 erwähnten Magnetfeldvektoren auf einer Ordinate 54 aufgetragen ist. Ein Winkel der Vektoren in der komplexen Ebene entspricht einem Rotorwinkel eines Rotors, ein voller Umlauf der Vektoren in der komplexen Ebene entspricht einem vollen Rotorumlauf des Rotors.

Der Vektor 56 repräsentiert das Magnetfeld des in Figur 1 dargestellten Gebermagnets, insbesondere eine magnetische Flussdichte der Magnetfelds des Gebermagnets. Der Vektor 58 repräsentiert das Magnetfeld des in Figur 1 erwähnten Störfeldes. Der Vektor 56' repräsentiert den Vektor 56, welcher parallelverschoben an das Ende des Vektors 58 ansetzt. Von einem Ursprung des Koordinatensystems setzt die Richtung 60 des Gesamtfeldes an, welche von dem in Figur 1 dargestellten magneto-resistiven Sensor 12 erfasst werden kann. Wenn der Betrag des Vektors 56 bekannt ist, so kann mittels Vektoraddition des Vektors 58 und des parallelverschobenen Vektors 56' die Ausrichtung des Vektors 56 in Abhängigkeit der Ausrichtung 60 des Gesamtmagnetfeldes und des Betrages des Vektors 56 ermittelt werden, wenn eine Ausrichtung und ein Betrag des Störvektors 58, repräsentierend das Störmagnetfeld, bekannt ist.

Dargestellt ist auch ein Vektor 59, welcher einen nicht exakt erfassten Betrag eines Magnetfelds des Gebermagnets 6 in Figur 1 repräsentiert.

Wenn der Betrag des Vektors des Gebermagnetfeldes mittels der Hall-Sensoren nicht exakt erfasst wird, so resultiert dann auf der zuvor beschriebenen Vektorberechnung - insbesondere nach Rechenregeln für komplexe Zeiger - eine falsche Ausrichtung des Gebermagnetfeldes, repräsentiert durch eine Ausrichtung des Vektors 59.

Vorteilhaft wird von der Verarbeitungseinheit 20 in Figur 1 zu exakten Bestimmungen des Vektors 56 des Gebermagnetfeldes aus den Rotorpositionssignalen der Hall-Sensoren 14 und 16 ein Quadratursignal gebildet. Weiter vorteilhaft kann zur exakten Bestimmung des Vektors 56 wenigstens einer der Hall-Sensoren 14 und 16 ein temperaturkompensierter Hall-Sensor sein.

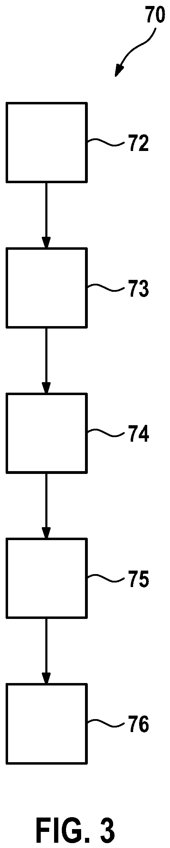

Figur 3 zeigt ein Verfahren 70 zum Betreiben eines elektronisch kommutierten Elektromotors. In einem Schritt 72 wird ein Störfeld, verursacht zumindest durch elektrische Komponenten des Elektromotors, ermittelt und ein Störfeldvektor erzeugt, der das Störfeld repräsentiert. In einem Schritt 73 wird ein Gebermagnetfeld eines Gebermagnets, welcher mit einem Rotor des Elektromotors verbunden ist, erfasst und ein Vektor erzeugt und abgespeichert, der das Gebermagnetfeld, wenigstens den Betrag des Gebermagnetfeldes, repräsentiert. In einem Schritt 74 wird ein Gesamtmagnetfeld erfasst, welches das Gebermagnetfeld und das Gebermagnetfeld überlagernde Störmagnetfeld umfasst.

In einem Schritt 75 wird die Gebermagnetfeldrichtung in Abhängigkeit des im Schritt 74 erfassten Gesamtmagnetfeldes, insbesondere der Gesamtmagnetfeldrichtung und der in den Schritten 72 und 43 erfassten und gespeicherten Vektoren ermittelt.

In einem Schritt 76 wird der Elektromotor zum Erzeugen eines magnetischen Drehfeldes in Abhängigkeit der Rotorposition angesteuert, welcher der im Schritt 75 ermittelten Gebermagnetfeldrichtung entspricht.

## Patentansprüche

1. Elektronisch kommutierter Elektromotor (1) mit einem insbesondere permanentmagnetisch ausgebildeten Rotor (5) und einem Stator (3) und mit einer mit dem Stator (3) verbunden Steuereinheit (20), welche ausgebildet ist, den Stator (3) zum Erzeugen eines magnetischen Drehfeldes zu bestromen,
wobei
der Elektromotor (1) wenigstens einen Hall-Sensor (14, 16) aufweist, welcher ausgebildet ist, wenigstens einen Betrag eines Magnetfeldes (56), erzeugt von einem mit dem Rotor (5) verbundenen Gebermagnet (6) zu erfassen und ein das Magnetfeld (56) repräsentierendes Rotorpositionssignal zu erzeugen, und der Elektromotor (1) wenigstens einen Magneto-Resistiven Sensor (12) aufweist, welcher mit dem Rotor (5) drehverbunden und ausgebildet ist, eine Ausrichtung eines Gesamtmagnetfeldes (60) während eines Rotorumlaufes des Rotors (5) zu erfassen und ein diese repräsentierendes Rotorpositionssignal zu erzeugen, wobei das Gesamtmagnetfeld (60) das Gebermagnetfeld (56) und ein dieses überlagerndes von elektrischen Komponenten des Elektromotors erzeugtes Störmagnetfeld (58) umfasst, und die Steuereinheit (20) eingangsseitig mit den Rotorpositionssensoren (14, 16, 12) verbunden und ausgebildet ist, die Rotorposition des Rotors (5) in Abhängigkeit der Ausrichtung des Gesamtmagnetfeldes (60), wenigstens eines zuvor abgespeicherten Betrages des Gebermagnetfeldes (56) und eines Betrages und einer Ausrichtung des Störmagnetfeldes (58) vektoriell zu ermitteln.
**dadurch gekennzeichnet, dass**
der Elektromotor (1) wenigstens einen weiteren Hallsensor (16) aufweist, welcher ausgebildet ist, das Gebermagnetfeld (56) zu erfassen und ein weiteres die Rotorposition repräsentierendes Rotorpositionssignal zu erzeugen, wobei der Hallsensor (14) und der weitere Hallsensor (16) in Rotorumlaufrichtung zueinander versetzt angeordnet sind.

2. Elektromotor (1) nach Anspruch 1,
**dadurch gekennzeichnet, dass**
der Hallsensor (14) und der weitere Hallsensor (16) in Rotorumlaufrichtung orthogonal zueinander versetzt angeordnet sind.

3. Elektromotor (1) nach einem der vorhergehenden Ansprüche,
**dadurch gekennzeichnet, dass**
der Hallsensor (14) und/oder der weitere Hallsensor (16) ein temperaturkompensierter Hallsensor ist, welcher ausgebildet ist, ein insbesondere digitales Hallsignal unabhängig von einer Temperatur des temperaturkompensierten Hallsensors zu erzeugen.

4. Elektromotor (1) nach einem der vorhergehenden Ansprüche,
**dadurch gekennzeichnet, dass**
die Steuereinheit (20) ausgebildet ist, aus den Rotorpositionssignalen des Hallsensors (14) und des weiteren Hallsensors (16) ein Gesamt-Hall-Signal, insbesondere ein Quadratursignal zu erzeugen und das Gebermagnetfeld, insbesondere Betrag und Ausrichtung des Gebermagnetfeldes in Abhängigkeit des Gesamt-Hall-Signals zu ermitteln.

5. Elektromotor (1) nach einem der vorhergehenden Ansprüche 1 bis 3,
**dadurch gekennzeichnet, dass**
die Steuereinheit (20) ausgebildet ist, eine Ausrichtung oder zusätzlich den Betrag das Gesamtmagnetfeldes in Abhängigkeit des Gesamt-Hall-Signals, insbesondere Quadratursignals zu ermitteln.

6. Elektromotor (1) nach einem der vorhergehenden Ansprüche,
**dadurch gekennzeichnet, dass**
der temperaturkompensierte Hallsensor eine Betriebsspannung aufweist, die einer Betriebsspannung der Steuereinheit entspricht.

7. Verfahren (70) zum Betreiben eines elektronisch kommutierten Elektromotors (1) gemäß einem der vorherigen Ansprüche, bei dem mittels eines Hall-Sensors (14, 16) wenigstens eines Betrag eines Gebermagnetfeldes (56), erzeugt von einem mit dem Rotor (5) verbundenen Gebermagnet (6) im stromlosen Zustand des Stators (3) erfasst und abgespeichert wird,
und eine Ausrichtung eines Gesamtmagnetfeldes (60) während eines Rotorumlaufes des Rotors (5) mittels eines mit dem Rotor (5) drehverbundenen Magneto-Resistiven Sensors (12) erfasst wird und ein die Ausrichtung repräsentierendes Rotorpositionssignal erzeugt wird, wobei das Gesamtmagnetfeld (60) das Gebermagnetfeld (56) und ein dieses überlagerndes von elektrischen Komponenten des Elektromotors (1) erzeugtes Störmagnetfeld (58) umfasst,
wobei eine Ausrichtung des Gebermagnetfeldes (56) in Abhängigkeit der erfassten Ausrichtung des Gesamtmagnetfeldes (60), des zuvor abgespeicherten Betrages des Gebermagnetfeldes und eines Betrages und einer Ausrichtung des Störmagnetfeldes vektoriell ermittelt wird, und wobei mittels eines weiteren Hallsensors (16) das Gebermagnetfeld (56) erfasst wird und ein weiteres Hallsignal erzeugt wird, und aus dem Hallsignal und dem weiteren Hallsignal ein Gesamt-Hallsignal gebildet wird, welches das Gebermagnetfeld (56) repräsentiert.

8. Verfahren nach Anspruch 7, wobei das Gesamt-Hallsignal ein Quadratursignal ist.

## Claims

1. Electronically commutated electric motor (1) comprising a rotor (5), which is embodied in particular as a permanent magnet rotor, and a stator (3), and a control unit (20) that is connected to the stator (3), which control unit is embodied for the purpose of energizing the stator (3) in order to generate a rotating magnetic field,
wherein
the electric motor (1) comprises at least one Hall sensor (14, 16) that is embodied for the purpose of ascertaining at least one magnitude of the magnetic field (56) that is generated by a sensor magnet (6) that is connected to the rotor (5), and for the purpose of generating the rotor position signal that represents the magnetic field (56), and the electric motor (1) comprises at least one magnetoresistive sensor (12) that is rotatably connected to the rotor (5) and embodied for the purpose of ascertaining an alignment of a total magnetic field (60) during a rotor revolution of the rotor (5) and for the purpose of generating a rotor position signal that represents said alignment, wherein the total magnetic field (60) comprises the sensor magnetic field (56) and an interference magnetic field (58) that is superimposed on said sensor magnetic field (56) and is generated by electrical components of the electric motor, and the control unit (20) is connected at the input side to the rotor position sensors (14,16,12) and is embodied for the purpose of ascertaining by means of a vector calculation the rotor position of the rotor (5) in dependence upon the alignment of the total magnetic field (60), at least of a previously stored magnitude of the sensor magnetic field (56) and a magnitude and an alignment of the interference magnetic field (58),
**characterized in that**
the electric motor (1) comprises at least a further Hall sensor (16) that is embodied for the purpose of ascertaining the sensor magnetic field (56) and for the purpose of generating a further rotor position signal that represents the rotor position, wherein the Hall sensor (14) and the further Hall sensor (16) are arranged offset with respect to each other in the direction of the rotor revolution.

2. Electric motor (1) according to Claim 1,
**characterized in that**
the Hall sensor (14) and the further Hall sensor (16) are arranged in an orthogonally offset manner with respect to each other in the direction of the rotor revolution.

3. Electric motor (1) according to any one of the preceding claims,
**characterized in that**
the Hall sensor (14) and/or the further Hall sensor (16) is a temperature-compensated Hall sensor that is embodied for the purpose of generating in particular a digital Hall sensor signal independently of a temperature of the temperature-compensated Hall sensor.

4. Electric motor (1) according to any one of the preceding claims,
**characterized in that**
the control unit (20) is embodied for the purpose of generating a total Hall sensor signal, in particular a quadrature signal, from the rotor position signals of the Hall sensor (14) and of the further Hall sensor (16), and for the purpose of ascertaining the sensor magnetic field, in particular the magnitude and alignment of the sensor magnetic field in dependence upon the total Hall sensor signal.

5. Electric motor (1) according to any one of the preceding claims 2 to 4,
**characterized in that**
the control unit (20) is embodied for the purpose of ascertaining an alignment or in addition the magnitude of the total magnetic field in dependence upon the total Hall sensor signal, in particular a quadrature signal.

6. Electric motor (1) according to any one of the preceding claims,
**characterized in that**
the temperature-compensated Hall sensor comprises an operating voltage that corresponds to an operating voltage of the control unit.

7. Method (70) for operating an electronic commutated electric motor (1) in accordance with one of the preceding claims,
wherein by means of a Hall sensor (14,16) at least a magnitude of a sensor magnetic field (56) that is generated by a sensor magnet (6) that is connected to the rotor (5) is ascertained in the currentless state of the stator (3) and stored,
and an alignment of a total magnetic field (60) is ascertained during a rotor revolution of the rotor (5) by means of a magnetoresistive sensor (12) that is rotatably connected to the rotor and a rotor position signal that represents the alignment is generated,
wherein the total magnetic field (60) comprises the sensor magnetic field (56) and an interference magnetic field (58) that is superimposed on said sensor magnetic field and is generated by electrical components of the electric motor (1),
wherein an alignment of the sensor magnetic field (56) is ascertained by means of a vector calculation in dependence upon the ascertained alignment of the total magnetic field (60), the previously stored magnitude of the sensor magnetic field and a magnitude and an alignment of the interference magnetic field,
wherein by means of a further Hall sensor (16) the sensor magnetic field (56) is ascertained and a further Hall sensor signal is generated and a total Hall sensor signal is formed from the Hall sensor signal and the further Hall sensor signal, which total Hall sensor signal represents the sensor magnetic field (56).

8. Method according to Claim 7, wherein the total Hall sensor signal is a quadrature signal.

## Revendications

1. Moteur électrique (1) à commutation électronique, comprenant un rotor (5) notamment configuré à aimants permanents et un stator (3) ainsi qu'une unité de commande (20) reliée au stator (3), laquelle est configurée pour alimenter électriquement le stator (3) en vue de générer un champ tournant magnétique,
le moteur électrique (1) possédant au moins un capteur à effet Hall (14, 16) qui est configuré pour détecter au moins une valeur d'un champ magnétique (6), généré par un aimant transmetteur (6) relié au rotor (5), et générer un signal de position de rotor représentant le champ magnétique (6), et le moteur électrique (1) possédant au moins un capteur magnéto-résistif (12) qui est relié à rotation au rotor (5) et qui est configuré pour détecter une orientation du champ magnétique total (60) pendant un tour de rotor du rotor (5) et générer un signal de position de rotor qui représente celui-ci, le champ magnétique total (60) comprenant le champ magnétique de transmetteur (56) et un champ magnétique parasite (58) superposé à celui-ci généré par les composants électriques du moteur électrique, et l'unité de commande (20) étant reliée du côté de l'entrée aux capteurs de position de rotor (14, 16, 12) et étant configurée pour déterminer vectoriellement la position de rotor du rotor (5) en fonction de l'orientation du champ magnétique total (60), d'au moins une valeur mémorisée préalablement du champ magnétique de transmetteur (56) et d'une valeur ainsi que d'une orientation du champ magnétique parasite (58),
**caractérisé en ce que**
le moteur électrique (1) possède au moins un capteur à effet Hall supplémentaire (16), lequel est configuré pour détecter le champ magnétique de transmetteur (56) et générer un signal de position de rotor supplémentaire qui représente la position de rotor, le capteur à effet Hall (14) et le capteur à effet Hall supplémentaire (16) étant disposés décalés l'un par rapport à l'autre dans le sens de rotation du rotor.

2. Moteur électrique (1) selon la revendication 1, **caractérisé en ce que** le capteur à effet Hall (14) et le capteur à effet Hall supplémentaire (16) sont disposés décalés orthogonalement l'un par rapport à l'autre dans le sens de rotation du rotor.

3. Moteur électrique (1) selon l'une des revendications précédentes, **caractérisé en ce que** le capteur à effet Hall (14) et/ou le capteur à effet Hall supplémentaire (16) est un capteur à effet Hall compensé en température qui est configuré pour générer un signal Hall, notamment numérique, en fonction d'une température du capteur à effet Hall compensé en température.

4. Moteur électrique (1) selon l'une des revendications précédentes, **caractérisé en ce que** l'unité de commande (20) est configurée pour générer un signal Hall total, notamment un signal en quadrature, à partir des signaux de position de rotor du capteur à effet Hall (14) et du capteur à effet Hall supplémentaire (16) et pour déterminer le champ magnétique de transmetteur, notamment la valeur et l'orientation du champ magnétique de transmetteur, en fonction du signal Hall total.

5. Moteur électrique (1) selon l'une des revendications 1 à 3, **caractérisé en ce que** l'unité de commande (20) est configurée pour déterminer une orientation ou en plus la valeur du champ magnétique de transmetteur en fonction du signal Hall total, notamment du signal en quadrature.

6. Moteur électrique (1) selon l'une des revendications précédentes, **caractérisé en ce que** le capteur à effet Hall compensé en température possède une tension de service qui correspond à une tension de service de l'unité de commande.

7. Procédé pour faire fonctionner un moteur électrique (1) selon l'une des revendications précédentes,
avec lequel au moins une valeur d'un champ magnétique de transmetteur (56), généré par un aimant transmetteur (6) relié au rotor (5), est détectée à l'état hors tension du stator (3) au moyen d'un capteur à effet Hall (14, 16) et mémorisée,
et une orientation d'un champ magnétique total (60) pendant un tour de rotor du rotor (5) est détectée au moyen d'un capteur magnéto-résistif (12) qui est relié à rotation au rotor (5) puis un signal de position de rotor représentant l'orientation est généré, le champ magnétique total (60) comprenant le champ magnétique de transmetteur (56) et un champ magnétique parasite (58) superposé à celui-ci généré par les composants électriques du moteur électrique,
une orientation du champ magnétique de transmetteur (56) étant déterminée vectoriellement en fonction de l'orientation détectée du champ magnétique total (60), de la valeur mémorisée préalablement du champ magnétique de transmetteur et d'une valeur ainsi que d'une orientation du champ magnétique parasite (58),
et le champ magnétique de transmetteur (56) étant détecté et un signal Hall supplémentaire étant généré au moyen d'un capteur à effet Hall supplémentaire (16), et un signal Hall total qui représente le champ magnétique de transmetteur (56) étant généré à partir du signal Hall et du signal Hall supplémentaire.

8. Procédé selon la revendication 7, le signal Hall total étant un signal en quadrature.
